(19) **Europäisches Patentamt**

**European Patent Office**

**Office européen des brevets**

(11) **EP 0 934 587 B1**

(12) **EUROPEAN PATENT SPECIFICATION**

(45) Date of publication and mention
of the grant of the patent:
**31.05.2006 Bulletin 2006/22**

(51) Int Cl.:
*G11B 7/00* (2006.01)    *G11B 7/135* (2006.01)
*G11B 7/24* (2006.01)

(21) Application number: **98940535.2**

(22) Date of filing: **26.08.1998**

(86) International application number:
**PCT/IL1998/000410**

(87) International publication number:
**WO 1999/010881 (04.03.1999 Gazette 1999/09)**

(54) **READING METHOD AND APPARATUS FOR A THREE-DIMENSIONAL INFORMATION CARRIER**

LESEVERFAHREN UND -VORRICHTUNG FÜR EINEN DREIDIMENSIONALEN INFORMATIONSTRÄGER

PROCEDE ET APPAREIL POUR SUPPORT D'INFORMATIONS TRIDIMENSIONNEL

(84) Designated Contracting States:
**DE GB NL**

(30) Priority: **26.08.1997 IL 12162097**
**05.11.1997 US 64298 P**

(43) Date of publication of application:
**11.08.1999 Bulletin 1999/32**

(73) Proprietor: **D Data Inc.**
**New York, NY 10022 (US)**

(72) Inventors:
• **GLUSHKO, Boris**
**77132 Ashdod (IL)**
• **KRUPKIN, Vladimir**
**75357 Rishon LeZion (IL)**

(74) Representative: **Holme, Annelise et al**
**Holme Patent A/S,**
**Vesterbrogade 20**
**1620 Copenhagen V (DK)**

(56) References cited:
**US-A- 4 090 031**

EP 0 934 587 B1

**Description**

**FIELD OF THE INVENTION**

The present invention is in the field of scanning techniques and relates to a method and an apparatus for reading/recording data in a three-dimensional information carrier.

**BACKGROUND OF THE INVENTION**

In most of the known information carriers, such as magnetic and optical disks, tapes, cards, etc., the stored information is distributed within a surface of the carrier. The capacity of a device of this class (i.e. two-dimensional memory device) is limited by the surface area and is inverse proportional to the second order of reading radiation wavelength.

There is increasing demand for cheap and reliable large capacity carriers of digital information for computers, video systems, multimedia etc., and for high-density data storage in optical media, particularly for CD-ROM data and documents and image/movie storage in CD-sized disks. Such a carrier should have a storage capacity in excess of $10^{10}$ bytes, fast access time, high transfer rate and long term stability. Optical methods of recording and reading out information have advantages over magnetic methods due to less restricted requirements of the components and environment, and ability for parallel recording of information which is advantageous for mass production of such carriers.

There are two ways of increasing the storage capacity of an optical information carrier. One approach is based on the fact that the shorter the wavelength of recording radiation, the smaller the size of the illuminated spot. Hence, by decreasing the wavelength $\lambda$ of the recording radiation, the density of the stored data can be increased. The storage capacity of an optical disc is diffraction-limited by a value of $N$ bits, wherein **N = Disc-area/$\lambda^2$**, because only one binary value is stored in a diffraction-limited pixel. Quadrupled capacity can be gained using "super resolution" at fractions of wavelengths. High density of information is received when 3-5 bits are stored in a single data region, as a small variation of the length of the data region around the diffraction limit. This method requires precision optical, mechanical and electronic components, as well as high quality media, and therefore its capacity is limited by cost effectiveness.

Another approach of increasing the storage capacity of digital data carrier is based on making stacks of two disks. This approach suffers from the following drawbacks:

(1) data regions are light reflective, resulting in undesirable multiple reflection when reading out the stored information;
(2) power losses at each information disk during the propagation of reading and reflected beams to and from the internal disks, respectively;
(3) interference of beams reflected from different disks;
(4) diffraction of beams passing through the disk;
(5) beam distortions due to the optical aberrations, which appear when changing the optical path of the reading beam within the carrier to read different information planes (i.e. different disks); and
(6) high quality optical adhesives required for assembling the stack of disks, having no aberrations, bubbles, separations, inclusions, as well as no mechanical, thermal and chemical impact on the discs.

The information capacity of a stacked information carrier is limited in practice to $10^{10}$ bytes. One example of such an information carrier is the known digital versatile disk (DVD) in the form of a stack composed of two information disks. The disks are attached together by back-sides to double the capacity of the carrier.

Yet another approach consists of making a three-dimensional distribution of data regions within an information carrier, i.e. a three-dimensional optical memory device. The capacity of a three-dimensional memory device is proportional to the third order of reading radiation wavelength. The volume distribution of stored information significantly increases the storage capacity, as compared to that of the two-dimensional device. For example, the total thickness of a three-dimensional optical memory device can be about 1 mm and can consist of information layers having thickness of 0.01 mm. Thus, the storage capacity of this device is 100 times greater than the capacity of a single layer.

It is understood that the more information layers, the greater storage capacity of the memory device. However, the maximum number of information layers depends on a suitable reading technique to be used for reading out the stored information. On the other hand, the reading techniques are based on the main principles of the construction of the optical memory device.

A three-dimensional information carrier and a reading device therefor are disclosed, for example, in U.S. Patent No. 4,090,031. The information carrier comprises a substrate and a plurality of data layers provided on one side of the substrate. Each of the layers comprises data tracks formed of lines of data spots. The data spots are formed of either binary coded digital information or frequency or pulse length modulated analog information, which is photographically recorded. According to one approach disclosed in the above patent, the data spots are light reflective, being formed of light reflecting metal material having a reflecting index different from that of the layers. Selection of one data track for reading is accomplished by changing the focus of a reading light beam from one data layer to another. The main drawback of this approach is unavoidable multiple reflection and diffraction produced by different layers, resulting in the undesirable crosstalk affecting the signal-to-noise ratio. Practically, for that reason, such a "reflective" three-dimensional information carrier cannot be formed with more than two-three information layers. In other words, information recorded in a "reflective" information carrier is too limited. By an alternative approach, making the data spots of different photoluminescent materials having different optical properties has been proposed. In this case, the illumination means includes a suitable source of "white" light of many frequencies to illuminate different layers by reading beams of different wavelengths. The detection means includes different colored filters accommodated in front of numerous detectors, each associated with a corresponding one of the data layers. It is evident that this technique significantly complicates the manufacture of both the information carrier and the reading device used therewith.

Another three-dimensional information carrier is disclosed in U.S. Patent No. 5,268,862, wherein a fluorescent material having special properties is utilized as an active, data-containing material. More specifically, the active material contains photocromic molecules having two isomeric forms. The first isomeric form "A" is not fluorescent, it has absorption bands for ultraviolet radiation, and is transferred to the second form "B" under two visible photons absorption. The form "B" absorbs the two photons of reading radiation and fluoresces in the infrared range. A two-photon absorption process is used for writing information into the medium. Two focused beams are crossed at the region having dimensions of $\lambda^3$, each beam being formed by a picosecond or femtosecond pulse of light to provide the intensity required for both writing and reading processes. This means that two pulses should overlap in time domain. Accordingly, this approach has also a series of drawbacks, which will hardly permit it to be practically realized. First, the two-photon approach requires extremely high intensity laser pulses, $I \sim 10^{12} - 10^{13}$ W/cm$^2$, which in turn requires the femtosecond pulsewidth Ti: Sapphire lasers. Second, the $\mu$m-sized intersection of two focused laser beams required for reading out the stored information would be very difficult or even impossible for practical realization. Third, the reliable, stable photochrome material which may withstand multiple writing/erasing/reading cycles at a room temperature and possess the optical properties compatible with the existed miniature (diode) laser sources does not yet exist. Another problem is a long time period required for writing the information into the disc, which is about $10^5$ sec, if optimistic information writing rate is $10^6$ bits/sec. This makes the solution proposed in the patent to be very expensive even for mass production.

## SUMMARY OF THE INVENTION

There is accordingly a need in the art to significantly improve the conventional reading/recording techniques by a novel method and apparatus capable of reading/recording in a three-dimensional information carrier.

The main object of the present invention is to provide such a method and an apparatus that enables crosstalk between an addressed information layer and all other information layers to be significantly reduced, thereby allowing the number of information layers to be significantly increased.

There is provided according to one aspect of the present invention, a scanning apparatus for reading information in a three-dimensional information carrier according to claim 1.

The main idea of the present invention is based on the following. The scanning beam is projected onto the scan region located in the addressed layer (e.g. information layer). The scanning beam during the passage through the carrier interacts with the data regions located in and out of the addressed plane. Consequently, the output, excited radiation coming from the carrier contains output radiation components produced by the data regions located in the addressed plane, so-called "signal radiation", and output radiation components produced by the data regions located out of the addressed plane, so-called "noise radiation". Additionally, radiation coming from the carrier may include components of the incident radiation reflected from specific locations inside the carrier, so-called "noise reflection". The "signal radiation" should be separated from the entire radiation coming from the carrier and delivered to the detector unit. This is possible due to the different natures of incident and excited radiation.

The incident radiation is produced by a source of directed radiation. All the incident radiation is emitted within a certain predetermined solid angle. The excited radiation is undirected; it propagates in all directions from the excited centers, i.e. the data region. The light directing unit picks up and allows the detection of a portion of the collected output radiation propagating with a solid angle spatially separated from the solid angle of propagation of the incident radiation, and prevents a portion of the collected output radiation propagating within the same solid angle of propagation of the incident radiation from being detected. This is implemented here by utilizing a beam splitter accommodated in the optical path of the incident and output radiation. The beam splitter defines transmitting and non-transmitting (blocking) zones with respect to the incident, and transmitting and reflective zones with respect to the output radiation at predetermined locations.

According to one embodiments of the invention the beam splitter comprises a central zone transmitting both the incident and output radiation, and a periphery zone surrounding the central zone, which is blocking and reflective with respect to the incident and output radiation, respectively Thus, the incident radiation propagates within a paraxial area of the optical axis defined by the light directing unit. Only those components of the output radiation that propagate inclined to the optical axis (i.e. out of the paraxial area) are picked up and reflected towards the detector unit.

According to another embodiment of the invention, a beam splitter blocks a central portion of the incident radiation propagating substantially along the optical axis, and reflects solely that component of the output radiation which propagates within the paraxial area of the optical axis.

Thus, the optical paths of incident and excited radiation are spatially separated by means of the beam splitter and the only output radiation components propagating in a certain direction are reflected onto the detector unit by the beam splitter. The light directing unit comprises suitable optics that projects the scanning beam onto the scan region located in the addressed plane. Such optics typically provides different solid angles of propagation of output radiation components generated at different planes. By appropriately orienting the detector unit, only those components that impinge onto the reflective zone of the beam splitter at a desired angle, reach the detector unit.

The filtering means preferably comprises an optical filter, which may include a spatial filter and/or a spectral filter that allows the passage of the output radiation spectrum onto the sensor means and prevents the incident radiation spectrum from reaching the sensor means. The receiving surface is defined either by the optical filter, or, in the absence of the latter, by the sensor means.

The scan region may be sufficiently small to cover at least a portion of only one data region. Alternatively, the scan region may cover a plurality of data regions. In this case, the optical filter is in the form of a diffraction-limited aperture hole, whose diameter is defined by the dimensions of an image of one data region from the illuminated scan region, as obtained at the receiving surface.

The detector unit may also comprise a band-pass filter coupled to the sensor means so as to be responsive to the data representative of the detected output radiation and to separate therefrom a desired frequency range. This desired frequency range is indicative of an information signal coming from the addressed plane, this information signal having at least one parameter different from that of information signals coming from other non-addressed planes.

According to another aspect of the present invention, there is provided a method for reading information in a three-dimensional information carrier according to claim 18.

More specifically, the present invention is used with a multilayer optical disk for reading information stored therein and is therefore described below with respect to this application.

## BRIEF DESCRIPTION OF THE DRAWINGS

In order to understand the invention and to see how it may be carried out in practice, a preferred embodiment will now be described, by way of non-limiting example only, with reference to the accompanying drawings, in which:

**Figs. 1a and 1b** schematically illustrate the main principles of reading information in a three-dimensional fluorescent information carrier;
**Fig. 2a** is a block diagram illustrating the main components of a reading apparatus constructed according to one embodiment of the invention;
**Fig. 2b** is a block diagram illustrating the main components of a reading apparatus constructed according to another embodiment of the invention;
**Fig. 3** more specifically illustrates the construction of a beam splitter suitable for the apparatus of either Fig. 2a or 2b;
**Figs. 4a and 4b** schematically illustrate the main operational principles of the apparatus of either Fig. 2a or Fig. 2b;
**Figs. 5a and 5b** schematically illustrate two different examples of a scan region obtained in the apparatus of either Fig. 2a or Fig. 2b;
**Fig. 6** illustrates more specifically the construction of an aperture suitable for use in the apparatus of either Fig. 2a or Fig. 2b;
**Fig. 7** schematically illustrates the main principles underlying the implementation of the construction of the aperture of Fig. 6;
**Fig. 8** illustrates another construction of a beam splitter suitable for use in the apparatus of either Fig. 2a or Fig. 2b;
**Fig. 9** is a block diagram illustrating a reading apparatus according to yet another embodiment of the invention;
**Fig. 10** schematically illustrates a reading apparatus constructed according to yet another embodiment of the present invention;
**Fig. 11** illustrates more specifically the construction of a polarizer of the apparatus of Fig. 10; and
**Fig. 12** is block-diagram illustrating the main components of a reading apparatus according to yet another embodiment of the invention.

## DETAILED DESCRIPTION OF A PREFERRED EMBODIMENT

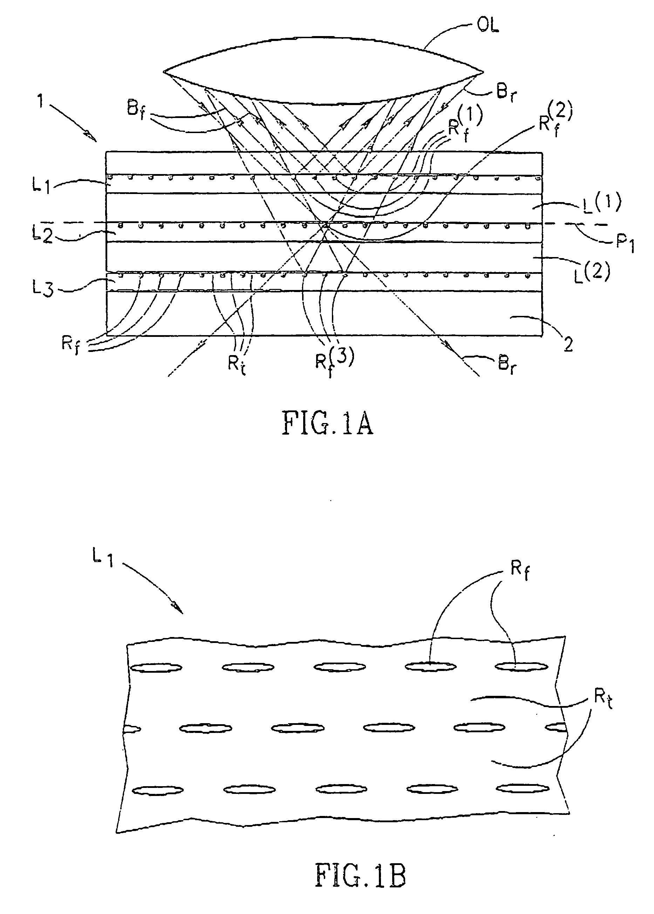

In order to more clearly illustrate the unique feature of the present invention, it would be reasonable to consider a three-dimensional optical memory device that utilizes fluorescent data regions, i.e. regions excitable in response to predetermined incident radiation. Fig. 1a schematically illustrates a three-dimensional optical disk, generally designated **1,** that comprises several information layers, for example, three layers $L_1$, $L_2$ and $L_3$, formed on a substrate **2**. Thickness **d** of each information layer is approximately 0.3-20$\mu$m. The adjacent information layers are spaced by intermediate layers $L^{(1)}$ and $L^{(2)}$, respectively, made of substantially optically transparent material. Thickness **L** of each intermediate layer is approximately 5-500$\mu$m.

As better shown in Fig. 1 b, information stored in the information layer, for example layer $L_1$, is in the form of a pattern having a plurality of spaced-apart data regions, generally at $R_f$, containing fluorescent material, which are spaced by surrounding, substantially optically transparent regions $R_t$. Such a memory device and methods of its manufacturing are disclosed in U.S. Patent Application No. 08/956,052 assigned to the assignee of the present application.

If the disk **1** is illuminated by predetermined incident radiation, the fluorescent regions $R_f$ interacting with the incident radiation generates (excite) output fluorescent radiation. Turning back to Fig. 1a, a scanning beam of the suitable incident radiation, generally at $B_r$, is directed through an objective lens **OL** onto an addressed layer, for example layer $L_2$, located in a focal plane $P_1$ of the lens. The optical path of the incident (reading) radiation $B_r$ inside the disk **1** includes fluorescent regions $R_f^{(1)}$, $R_f^{(2)}$ and $R_f^{(3)}$ located above, in and below the addressed layer, respectively. All these regions produce output fluorescent radiation, generally at $B_r$. Only that fluorescent radiation component which is produced by the data region $R_f^{(2)}$ located in the addressed layer represents a signal to be detected (i.e. "signal fluorescence"), while the fluorescent radiation components produced by the non-addressed data regions $R_f^{(1)}$ and $R_f^{(3)}$ represent noise to be filtered out (i.e. "noise fluorescence"). Additionally, although not specifically shown, certain reflected radiation may appear, because of refraction index differences, for example, caused by an adhesive material used for attaching the layers to each other. This reflected radiation also represents noise to be filtered out (i.e. "noise reflection").

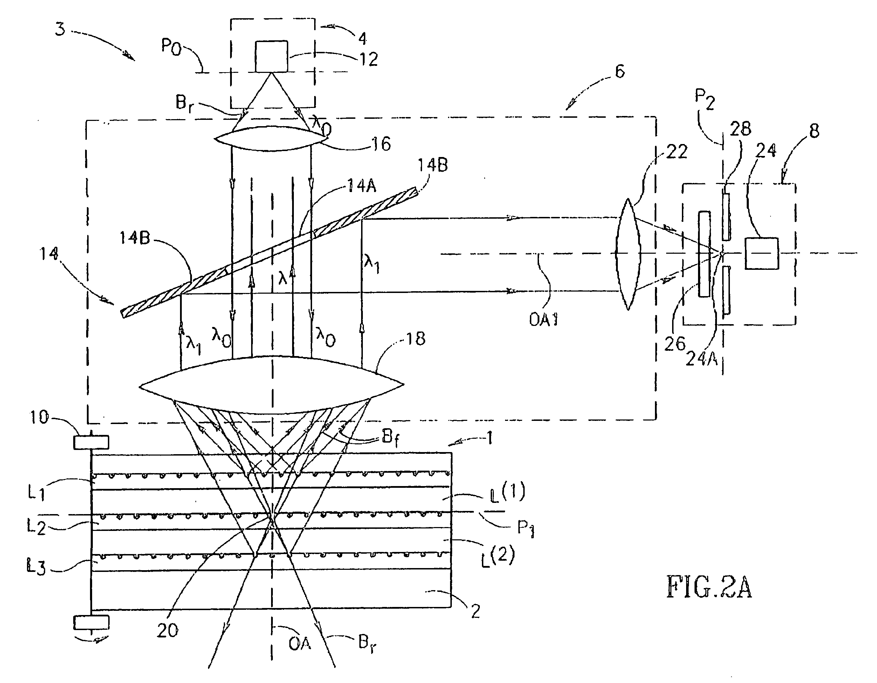

Referring to Fig. 2a, there is illustrated a reading apparatus, generally designated 3, constructed according to one embodiment of the invention, suitable for reading out information stored in the disk **1**. The apparatus **3** comprises an illumination unit generally at **4**. a light directing optics 6 and a detector unit **8**. A suitable drive means, generally at **10,** is typically provided for driving the rotation of the disk **1** about its axis, and for driving a reciprocating movement of the disk **1** with respect to the reading apparatus **3** so as to effect scanning of the addressed layer.

The illumination unit **4** includes a light source **12** in the form of a laser diode that generates a reading beam $B_r$ having the wavelength $\lambda_0$. The interaction between the reading beam $B_r$ and the fluorescent data regions $R_f$ produces output fluorescent radiation $B_f$ having wavelength $\lambda_1$ different from that of the reading beam.

The light directing optics **6** comprises a beam splitter **14,** converging lenses **16** and **18** accommodated at opposite sides of the beam splitter **14** such that the light source **12** and the addressed layer $L_2$ are positioned in the focal planes $P_0$ and $P_1$ of the lenses **16** and **18,** respectively. Thus, the lens **16** directs the reading radiation $B_r$ in the form of a parallel beam onto the beam splitter **14,** while the lens **18** focuses the reading beam onto a spot **20** (constituting a scan region) in the focal plane $P_1$ which is maintained to coincide with the addressed layer $L_2$ (using a suitable auto-focusing technique). A similar imaging lens **22** is accommodated in the optical path of the fluorescent radiation $B_f$ propagating towards the detector unit **8**.

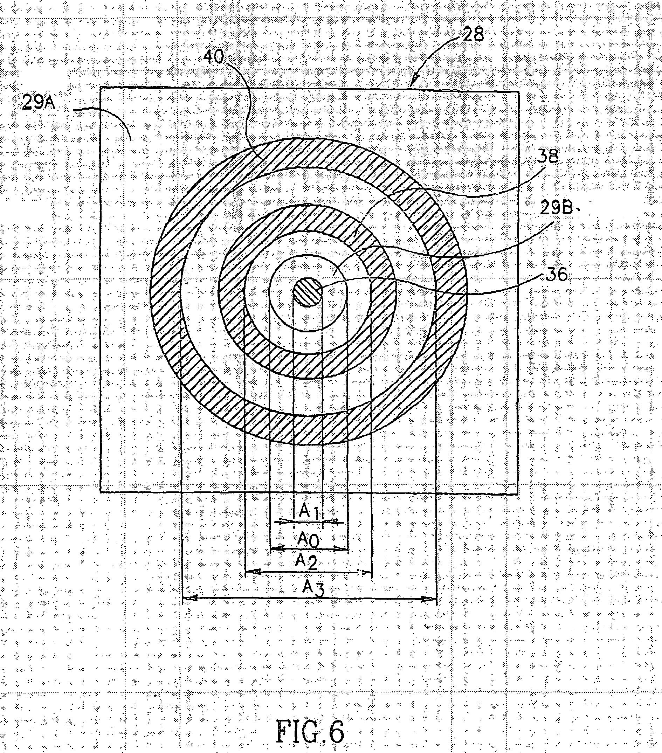

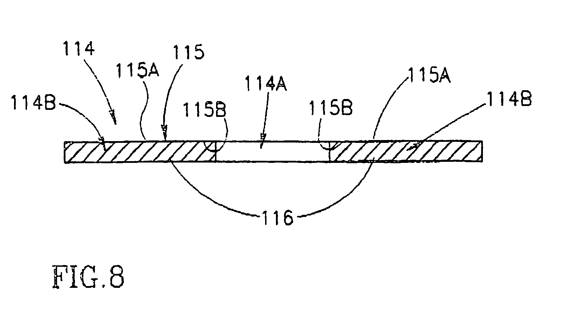

The detector unit **8** comprises a suitable sensor **24,** a spectral filter **26** and an aperture **28** (constituting an optical filter). The filter **26** may be of any known kind, operating so as to allow the propagation therethrough of the known spectrum of the fluorescent radiation, and to prevent any other radiation (reading) from being detected by the sensor **24**. The latter operates in a conventional manner for providing electrical output representative of the radiation components received. The aperture **28** is typically a radiation blocking plate **29a** formed with a radiation transmitting hole **29b,** the particulars of which will be described further below with reference to Figs. 6 and 7. The aperture **28** is located in a focal plane $P_2$ of the imaging lens **22** and defines a sensing surface **24a**.

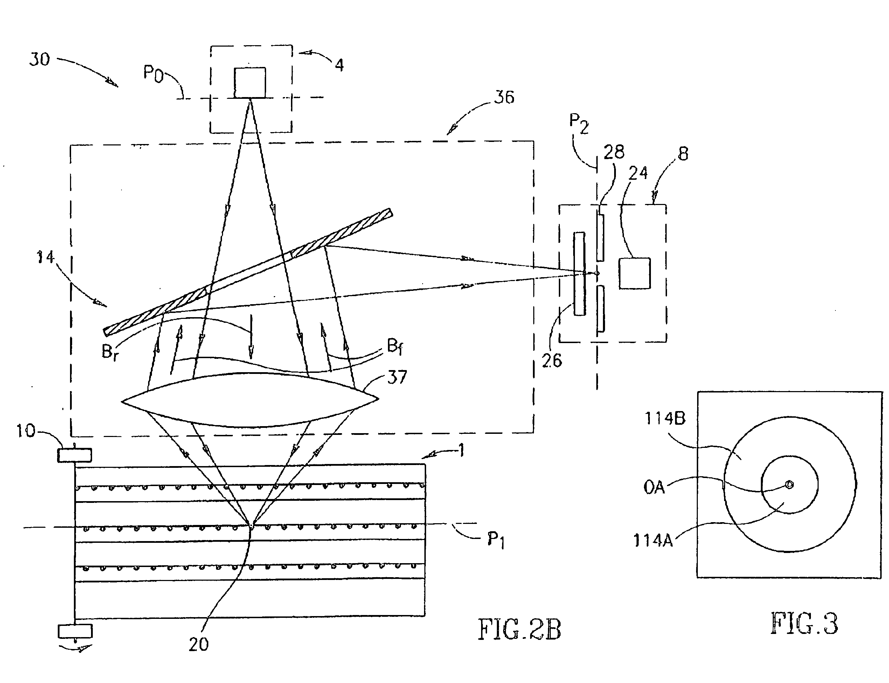

In the above example, the light directing optics **6** comprises lenses **16, 18** and **22,** having the light source **12,** addressed plane and receiving surface **24a** in their focal planes, respectively. Fig. 2b illustrates an alternative example of a reading apparatus **30,** which is generally similar to the apparatus **3,** but has a somewhat different construction of a light directing optics **36**. The same reference numbers are used for identifying those components, which are identical in the devices **3** and **30,** to facilitate understanding. Here, the focusing lenses **16, 18** and **20** of the apparatus **3** are replaced by a single collecting lens **37**. The lens **37** typically projects the light source **12** located in the plane $P_0$ onto the spot **20** located in the plane $P_1$ and directs beams coming from the spot **20** onto an imaging plane $P_2$. The planes $P_0$, $P_1$ and $P_2$ here, as well as in the example of Fig. 2a, are three conjugated planes.

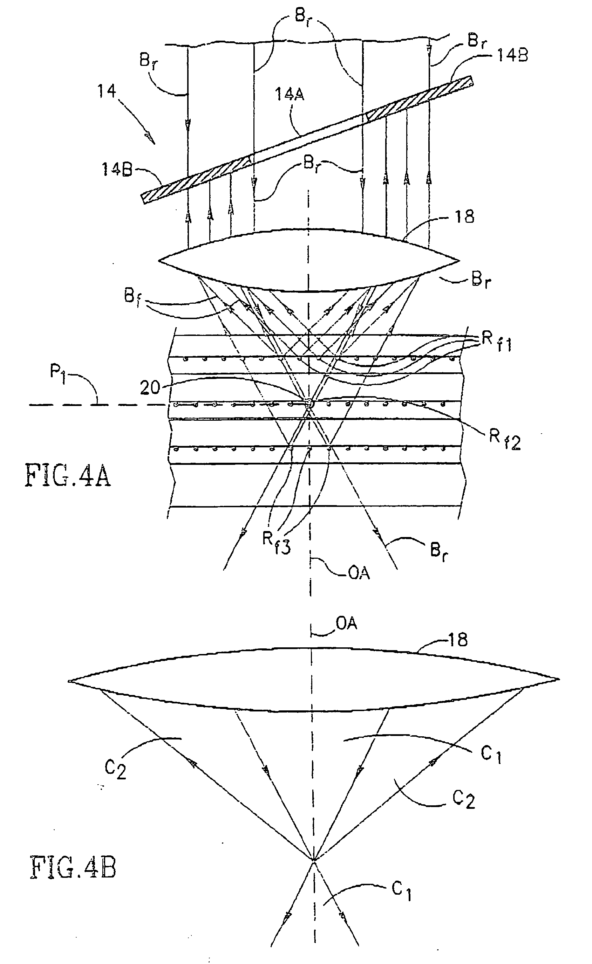

Referring to Figs. 2a, 2b and 3, the beam splitter **14** is formed with zones **14a** and **14b** having different properties with respect to the incident radiation $B_r$ and fluorescent radiation $B_f$. The zones **14a** and **14b** are located relatively close to and distanced from an optical axis **OA** defined by the optics **6,** respectively. The circular zone **14a** is high transitive for all wavelength ranges (i.e. for both the reading and fluorescent radiation $B_r$ and $B_f$). The transmitting zone **14a** may be a through-going hole made in the central portion of the beam splitter **14**. As for the annular-shaped zone **14b,** it blocks the incident radiation by its one side facing the light source **12,** and has a reflective opposite side facing the disk **1**. In other words, the beam splitter **14** is in the form of annular-shaped mirror. It should be noted that the annular shape is an optional solution, which is preferable in view of considerations of symmetry and effectiveness.

Figs. 4a and 4b illustrate more specifically the operation of the beam splitter **14** with respect to the incident beam $B_r$ impinging thereon. The beam splitter **14** cuts off a portion of the incident beam $B_r$ propagating in a periphery area relative to the optical axis **OA**, and allows the passage of a portion of the beam $B_r$ propagating in a paraxial area of the optical axis **OA** through the transmitting zone **14a**. The transmitted portion of the reading beam $B_r$, being projected by the lens **18** (Fig. 2a) onto the spot **20**, propagates to the focal plane $P_1$ within a certain solid angle defining an upper-cone $C_1$ and further (towards the bottom of the disk **1**) within a similar lower-cone $C_1$. The beam $B_r$ interacts with the fluorescent regions $Rf_1$ located in the before-focus layer $L_1$, with the in-focus fluorescent region $Rf_2$ and with the fluorescent regions $Rf_3$ located in the after-focus layer $L_3$. These regions generate the fluorescent radiation components, generally at $B_f$, which are collected by the lens **18** and directed onto the beam-splitter **14**.

The reading radiation is produced by a directed source of radiation, the laser diode in the present example. All the reading radiation $B_r$ propagates within a certain solid angle and can be confined within the numerical aperture *NA* up to 0.2-0.4 without intensity losses. The solid angle of propagation (cones $C_1$) of the reading radiation $B_r$ inside the disk **1** (i.e. the surface area of interaction between the reading radiation and the inside of the disk) is defined by the numerical aperture of the reading light propagation. Reflected radiation, if any, would mainly propagate within the same upper-cone $C_1$ and would therefore be transmitted back through the zone **14a**.

As for the excited, fluorescent radiation $B_r$ it is undirected, propagating in all directions from its source (i.e. the excited fluorescent region $R_f$)**.** The amount of fluorescent radiation $B_f$ that propagates substantially along the optical axis **OA** (with the numerical aperture up to 0.2-0.4), i.e. within the upper-cone $C_1$, is small, as compared to the fluorescent radiation propagating inclined to the optical axis **OA** (with the numerical aperture $NA_r$ from 0.2-0.4 up to 0.6-0.7), within a ring-shaped cone segment $C_2$. Hence, by collecting only those components of the fluorescent radiation which propagate within the cone **segment $C_2$** inclined to the optical axis **OA,** the energy losses are acceptable.

Thus the fluorescent radiation $R_f$ impinges onto the mirror **14** and is transmitted through the zone **14a** and reflected by the zone **14b.** It is understood, although not specifically shown, that only those fluorescent radiation components that are produced at the focal point, i.e. the addressed fluorescent region $Rf_2$, ensue from the lens **18** parallel to its optical axis **OA,** and therefore impinge onto the reflective zone **14b** at a certain angle (45° in the present example of Fig. 2a). As for the other fluorescent radiation components, they are produced at out-of-focus locations, and therefore impinge onto the mirror **14** at angles other than that of the in-focus generated components. Turning back to Fig. 2a, an optical axis $OA_1$ of the imaging lens **22** is perpendicular to the optical axis OA, i.e. is parallel to those fluorescent radiation components that are reflected from the mirror portion **14b** at the certain angle (e.g. 45°). Consequently, the fluorescent radiation components impinging onto the imaging lens **22** parallel to its optical axis $OA_1$, would intersect in its focal plane $P_2$, i.e. at the location of the receiving surface **24a.**

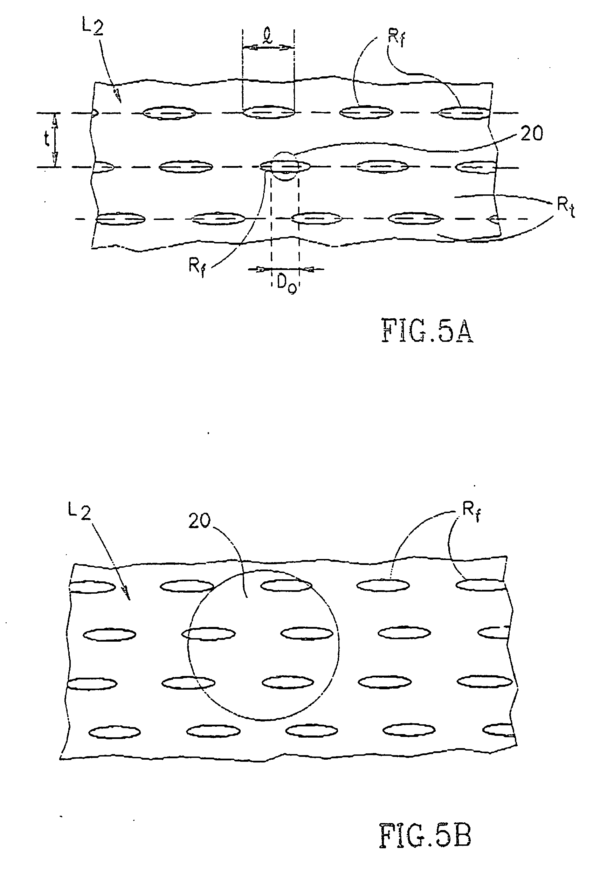

To successfully read out the stored information, the apparatus **3** utilizes a diffraction-limited illumination channel and, if needed, a diffraction-limited receiving channel. Figs. 5a and 5b illustrate two different examples of diffraction-limited illuminated spots that could be produced in the apparatus **3.** As shown in Fig. 5a, the diameter of the illuminated spot **20** is sufficiently small, so as to cover at least a portion of only one fluorescent region $R_f$. In other words, if *I* is the average length of the fluorescent region, *t* is a track pitch and $D_0$ is the diameter of the illuminated spot **20,** then the following conditions take place: $D_0 < I$; and $D_0 < 2t$. In this case, the aperture **28** placed in the receiving channel may have a relatively large aperture hole **29b** (Fig. 2a) relative to the dimensions of the spot **20** and to that of its image obtained at the receiving surface **24a.** Theoretically, the provision of such an aperture is optional. In the absence of the aperture **28,** the receiving surface **24a** is constituted by the sensing surface (not shown) of the sensor **24.**

According to the example of Fig. 5b, the light source is non-coherent, even non-monochromatic (e.g. LED, lamp), and therefore the illuminated spot **20** covers several fluorescent regions. In this case, the diameter of the aperture hole **29b** is substantially equal to that of the image of one fluorescent region included in the illuminated spot **20,** as obtained at the receiving surface **24a** (taking into account a certain magnification provided by the optical elements).

Figs. 6 and 7 illustrate the main principles underlying the implementation and operation of the aperture **28.** In order to facilitate understanding, the addressed layer is selected to be $L_3$. Thus, the reading radiation $B_r$ illuminates the spot **20** in the addressed layer $L_3$, and spots $S_2$ and $S_1$ in the upper layers $L_2$ and $L_1$, respectively. The aperture hole **29b** has a diameter $A_0$ slightly larger than the diameter $A_1$ of an image **36** of one fluorescent region located within the illuminated spot **20** in the addressed layer $L_3$. The diameter $A_0$ of the aperture hole **29b** should, however, be less than that of the image of the track pitch (not shown). Rings **38** and **40** having internal diameters $A_2$ and $A_3$, respectively, are images of the illuminated spots $S_2$ and $S_1$ located in the layers $L_2$ and $L_1$, respectively.

In view of the above, the beam splitter **14** plays the following two roles:

1) It prevents the sensor **24** from receiving radiation reflected from the disk **1**. Indeed the beam splitter **14** separates the optical paths of the reading and fluorescent radiation and reflects towards the sensor **24** only the fluorescent radiation;

2) It provides the spatial separation of the "signal fluorescence" and "noise fluorescence" on the conjugate plane

$P_2$ (the receiving surface **24a**). Indeed, the fluorescent radiation coming from any out-of-focus layer ("noise") is projected onto the plane $P_2$ in the form of a ring having an internal radius larger than that of the aperture hole **29b**. On the contrary, the fluorescent radiation coming from the in-focus layer ("signal"), is projected onto the plane $P_2$ in the form of a diffraction-limited spot.

Turning back to Figs. 6 and 7, the internal diameter of the ring **38** formed by radiation coming from the layer $L_2$ adjacent to the in-focus layer $L_3$ may be represented as follows:

$$A_2 = 2L(NA)_r (f_2/f_1) \qquad (1)$$

wherein $NA_r$ is the numerical aperture of the incident radiation propagation; $f_1$ and $f_2$ are focal length of the objective lens **18** and imaging lens **22**, respectively, such that $f_2 > f_1$.

The rings formed by light coming from other out-of-focus layers have diameters of size $Ai = i A_2$, where i=2,3,.... Thus, if the aperture hole 29b having the diameter $A_1$ that satisfies the following condition: $\lambda_f < A_0 < A_1$ is placed at the focal plane of the imaging lens **22**, it transmits radiation coming from the point at the desired, addressed layer and cuts-off light coming from all out-of-focus layers. This results in the negligible crosstalk between the neighboring layers. The signal-to-noise ratio can be estimated as follows:

$$S/N \approx f_2^2 A_2^4 (NA)_f^2 / f_1^2 A_0^4 (NA)_r^2 \sim 10^4 \qquad (2)$$

It is important to note, although being not specifically shown, that owing to the fact that output fluorescent radiation propagates in all directions from its source (i.e. the fluorescent region), the detector unit could be accommodated at the opposite side of the disk, as compared to that of the illumination unit location. Inconvenience caused by such location of the detector unit is the need for separate light collecting optics at the same side as the detector unit.

The mirror **14** in the devices **3** and **30** could be replaced by a dichroic-like, selectively reflective beam splitter **114** schematically illustrated in Fig. 8. The beam splitter **114,** similar to the beam splitter **14,** is formed with a central hole **114a,** constituting a transmitting zone, and a surrounding zone **114b.** A front side **115** of the zone **114b** (with respect to the direction of propagation of the incident radiation) has an absorbing (black) outer surface **115a** and reflective (i.e. aluminum) coating on its inner surface **115b.** The reflective coating is covered by a material **116,** for example a suitable color-glass, that absorbs the spectrum of incident radiation and transmits that of the fluorescent radiation. This construction of the beam splitter **114** eliminates the need for a spectral filter in the detection unit. It should be noted, although not specifically shown, that an appropriately designed holographic plate may replace the lenses **16** and **22** and the beam splitter **14, 114,** provided it is capable of carrying out the following functions:

- projecting the light source **12** (located in the plane $P_1$) onto the diffraction-limited scan region **20** located in the conjugate plane $P_1$ inside the disk 1;
- providing a predetermined solid angle of propagation of the scanning beam;
- picking up predetermined components of the output radiation propagating with a certain solid angle spatially separated from the solid angle of propagation of the scanning beam;
- projecting the picked up components of the output radiation onto the receiving surface **24a** located in the conjugate plane $P_2$.

In the above-described examples, the incident radiation propagates substantially along the optical axis **OA** (cone $C_1$), while the picked up fluorescent radiation components propagate inclined to the optical axis **OA** (cone $C_2$).

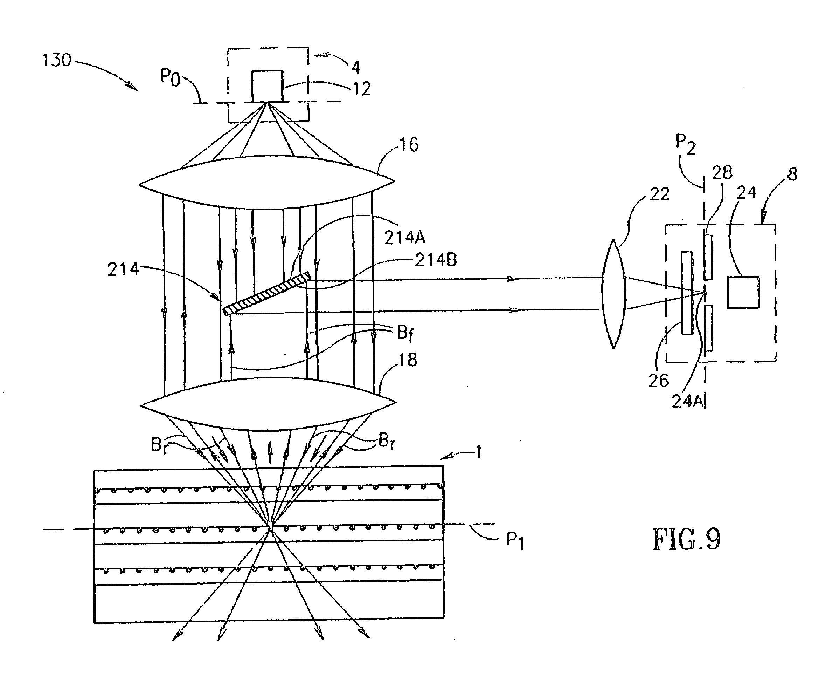

Reference is made to Fig. 9, illustrating a reading apparatus **130** constructed according to yet another embodiment of the invention, utilizing an alternative condition for the numerical apertures of incident and fluorescent radiation propagation. Similarly, the same reference numbers are used for identifying those components, which are identical with the previously described examples. The apparatus **130** comprises a beam splitter **214** in the form of a mirror having radiation blocking and reflective surfaces **214a** and **214b,** respectively. The mirror **214** is accommodated so as to cut off a central portion of the incident beam $B_r$ defined by the dimensions of the mirror **214,** and to transmit a periphery portion of the incident beam $B_r$ around the mirror **214.** The output radiation components propagating substantially along the optical axis **OA** are reflected from the reflective surface of the beam splitter **214.** Thus, the output fluorescent radiation propagates within the central cone $C_1$, while the incident radiation propagates within the surrounding cone-segment $C_2$. The beam splitter **214** may be dichroic-like, selectively reflecting as described above with respect to the beam splitter **114** illustrated in Fig. 8.

It is known that differences in refraction indices of different layers is the reason for undesirable multiple Fresnel reflection in the disk 1. As indicated above, the difference in the refraction indices may be introduced by the adhesive material. In other words, it is not always possible to provide a multilayer disk with negligible difference in refractive indices of the layers.

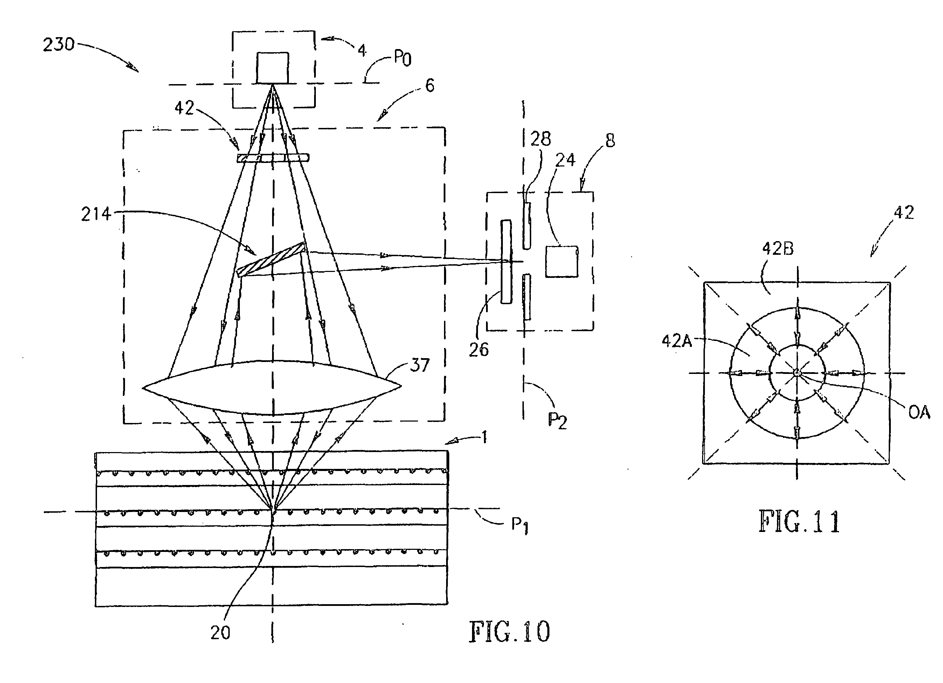

Fig. 10 illustrates a reading apparatus **230** whose construction enables reading of the stored information in a manner to prevent Fresnel reflections. Here, the light directing optics **6** is constructed partly similar to that of the apparatus **30** described above with reference to Fig. 2b and partly similar to that of the apparatus **130.** More specifically, it comprises the lens **37** projecting the light source **12** onto the spot **20** located in the addressed plane and the beam splitter **214.** The apparatus **230** distinguishes from the previously described examples in the provision of a radial polarizer **42** accommodated in the optical path of the emitted incident radiation $\mathbf{B_r}$. The construction of the polarizer **42** is more specifically illustrated in Fig. 11. The polarizer **42** is in the form of a polarizing ring **42a** formed in a radiation blocking plate **42b.** The ring **42a** has a radially oriented plane of its preferred transmission (polarization) so as to transmit only those components of the beam $\mathbf{B_r}$ that have polarization vector lying in a plane containing optical axis **OA** for any part of the beam. The ring **42a** is accommodated such that a rim angle of the conical beam impinging onto the disk **1** is close to Brewster angle, and, therefore, the reflection of such beam is negligible.

It should be noted that the polarizer **42** may be a constructional part of the light source **12,** of the beam splitter **214** or of the lens **37** as a window, holographic element or grating.

The above technique of picking up the fluorescent component produced in the addressed plane in the disk **1** (i.e. in the addressed information layer) from all fluorescence coming from the disk 1 can be further improved in view of the following considerations. The incident beam on its way inside the disk interacts with the data regions located in and out of the addressed layer. The data regions are distributed in each information layer in a spaced-apart manner. A process of reading a binary information stored in the addressed information layer is implemented by detecting an information signal coming from successive illuminated spots **20** located in the addressed plane during the rotation of the disk **1.** This information signal is in the form of a sequence of fluorescent and non-fluorescent regions $\mathbf{R_f}$ and $\mathbf{R_t}$ in the addressed layer. The information signal associated with the addressed layer should be separated from all other signals propagating towards the detector unit. The frequency of the information signal is defined by the known distribution of the fluorescent regions $\mathbf{R_f}$ in the layer (i.e. the distance between the adjacent fluorescent regions) and by the known speed of rotation of the disk (i.e. the scanning speed). Hence, this information signal can be estimated prior to the reading procedure and, therefore, can be expected in the detecting channel.

The estimation of the expected information signal is based on the following considerations. The amount of the fluorescent radiation, collected by the lens **18** (Fig. 2a) and delivered to a detecting channel (not shown), is defined by the numerical aperture $(\mathbf{NA})_f$ of radiation propagation, as follows:

$$\eta_{collected} \approx ((NA)_f/2)^2 \tag{3}$$

$$\eta_{collected} \approx 0.09 \text{ for } (NA)_f = 0.6$$

The intensity $I_f$ of the fluorescent radiation produced by illuminating the single fluorescent region is determined by the intensity $I_r$ of the incident (reading) laser beam as follows:

$$I_f = qI_r\alpha d \tag{4}$$

wherein $q$ is the fluorescence quantum yield; $\alpha$ is extinction coefficient; $d$ is the thickness of the fluorescent region.

Assuming that a multilayer disc is formed of $M$ layers and the reading laser beam is focused onto an addressed $m$-th layer ($M \geq m \geq 1$), when the laser beam passes through any out-of-focus layer, its power decreases $P$ time, that is:

$$P = (1- \alpha dF)(1-R) \tag{5}$$

wherein $F$ is the information layer filling rate (i.e. the surface area covered by the fluorescent regions with respect to whole surface); $R$ is the effective interface's power reflection coefficient (i.e. Fresnel reflectivity) of the coupled information and intermediate layers sandwich. Thus, the dependence of the reading beam intensity $I_r$ on the number of layers that had been passed by the incident beam may be represented as follows:

$$I_r(n) = I_0 P^n \qquad (6)$$

wherein $n=1, 2, ..., M$ and $I_0$ is the initial intensity of the incident laser beam. The optimal value of the optical density $_\alpha dF$ of stored information should be small enough to allow the light to reach the lowermost information layer. Therefore, the following assumption should be made:

$$(1-P) << 1, \text{ i.e. } \alpha dF << 1 \text{ and } R << 1$$

In accordance with the equations (1)-(3) above, the intensity of "signal fluorescence" generated by the in-focus data regions collected by the objective lens and delivered to the detector unit will be:

$$I_s = \eta_{coup} q I_0 \, \alpha d \, F_0 \, P^{m-1} \qquad (7)$$

wherein $F_0 = (NA \cdot r_0 / 0.61\lambda)^2 \approx (r_0/\lambda)^2$ is the in-focus-layer "filling rate" (i.e. the surface area covered by the fluorescent regions with respect to the diffraction-limited laser spot). It can be easily shown that the average intensity of fluorescence generated by the fluorescent regions located in the out-of-focus layers is approximately equal to $I_s F/F_0$.

To simplify further considerations, we shall assume that $F \approx F_0$, which is typically the case in practice. At any $n$-th out-of-focus layer the illuminated spot has the size equal to $2L(n-m) \cdot (NA)_r$ and simultaneously covers about $N = [2(n-m)L \cdot (NA)_r / \delta]^2$ data regions, where $\delta \sim 2\lambda$ is the average distance between the adjacent data regions. If $L >> \lambda$, we have $N >> 1$ and the distribution of the locations of fluorescent regions and non-fluorescent (i.e. surrounding) regions over the surface of one information layer may be considered as Gaussian one with deviation $\sim N^{1/2}$. Then, the average intensity of background noise (i.e. fluorescence propagating towards the detector unit from all out-of-focus information layers) will be found as follows:

$$I_N = I_0 (1 - P^{2M}) / (1+P) \approx M I_s \qquad (8)$$

and the fluctuations of noise intensity will be found as follows:

$$\delta I_N = I_s \, \sigma \, \delta / (2L \bullet NA) \approx I_s \, \sigma \, (\lambda / L) \qquad (9)$$

wherein

$$\sigma^2 = \sum_{k=1}^{m-1} \frac{P^{2n-2m-2k}}{k^2} + \sum_{k=1}^{M-m} \frac{P^{2n-2m+2k}}{k^2} \qquad (10)$$

Here $\sigma$ is the normalized dispersion of noise intensity distribution. $\sigma$ is a very slowly varying parameter, which can be estimated as follows:

$$\sigma \approx 1 \pm 0.5 \text{ for } F < 0.2, \; 1 < M < 100, \; 0 < \alpha d < 0.2 \text{ and } 0 < R < 0.1 \qquad (11)$$

Hence, the condition of $L >> \lambda$ is required for small noise intensity fluctuations. Although at $M >> 1$ the average noise power is too large $(I_N >> I_s)$, in the case $L>>\lambda$ we have $I_s >> \delta I_N$, and it is possible to extract the data signal from the noise.

Thus, in contrast to the approach disclosed in the above U.S. Patent No. 5,268,862, the above examples of medium excitation enable only one focused laser beam to be utilized for exciting simultaneously huge amount of fluorescent regions in a whole volume confined within the solid angle (cone) of light propagation inside the disk. Therefore the reading of the single bit of information from the isolated data region is provided at the detection stage.

The amplitude of the information signal varies between its minimum and maximum values as a sequence of data regions and surrounding regions. As described above with reference to Fig. 7, the passage of the incident beam through the objective lens **18** results in the illuminated spot **20** in the addressed layer $L_3$ always being smaller than those $(S_1$ and $S_2)$ of the non-addressed layers $(L_1$ and $L_2)$. The spot of the non-addressed layer covers much more data regions than that of the addressed layer. Hence, the depth of modulation (i.e. the extent of amplitude variation) of the output fluorescent radiation produced in any out-of-focus layer is significantly different from that of the in-focus layer. This allows for reliable separating of the output radiation produced in the addressed layer from the output radiation coming from the carrier, by filtering out the low-frequency component of the detected fluorescent signal, resulting in sufficiently high signal-to-noise ratio. The low-frequency component includes *inter alia* fluorescent intensity modulation caused by distortions of the incident beam (resulting from its passage through the above-focus layers), and intensity modulation associated with the out-of-focus layer.

Indeed, the characteristic modulation frequency is different for different layers and is determined by the distance **L** between the layers. While at the addressed layer the micron-sized shift of the disk position will result in 100% amplitude modulation, at the adjacent layer the same shift will make negligible change in the fluorescence output. It happens because at the addressed layer the diffraction-limited laser spot illuminates the only single fluorescent region, while at the adjacent (out-of-focus) layer the laser spot size is about $2L \cdot (NA)_r$ and it simultaneously covers about $N^2$ data regions, wherein:

$$N = 2L \cdot (NA)_r / \delta \approx L/\lambda >> 1 \qquad (12)$$

For example at $L \sim 30\mu m$ there will be covered about 3600 data regions. At the micron-sized shift of the laser spot position the only small amount of "new" data regions $N \sim L/\lambda$ will appear inside the laser spot size. In other words, the modulation frequency value of fluorescence coming from the non-addressed layer is $N$ times lower than the same one for the fluorescence coming from the addressed layer. This ratio permits to provide good filtration of the detected signal to read the information only from the single data region.

Supposing the Gaussian distribution of the locations of fluorescent regions and non-fluorescent (surrounding) regions within the surface of the information layer and assuming that the distance between adjacent information layers is: $L \sim 30\mu m$ ($N \sim 60$), the data regions number deviation and signal modulation depth at the adjacent layer can be estimate as follows:

$$\delta N = \sqrt{N} \approx 8; \quad \delta I/I_s = \sqrt{N}/N^2 \approx 2 \cdot 10^{-3} \qquad (13)$$

Taking into account the noise value accumulated from all non-addressed layers the detected signal-to-noise ratio can determined:

$$S/N = [\sum \delta I_m/I_s]^{-1} = [1.5 \, \delta I/I_s]^{-1} \approx 5 \cdot 10^2 \qquad (14)$$

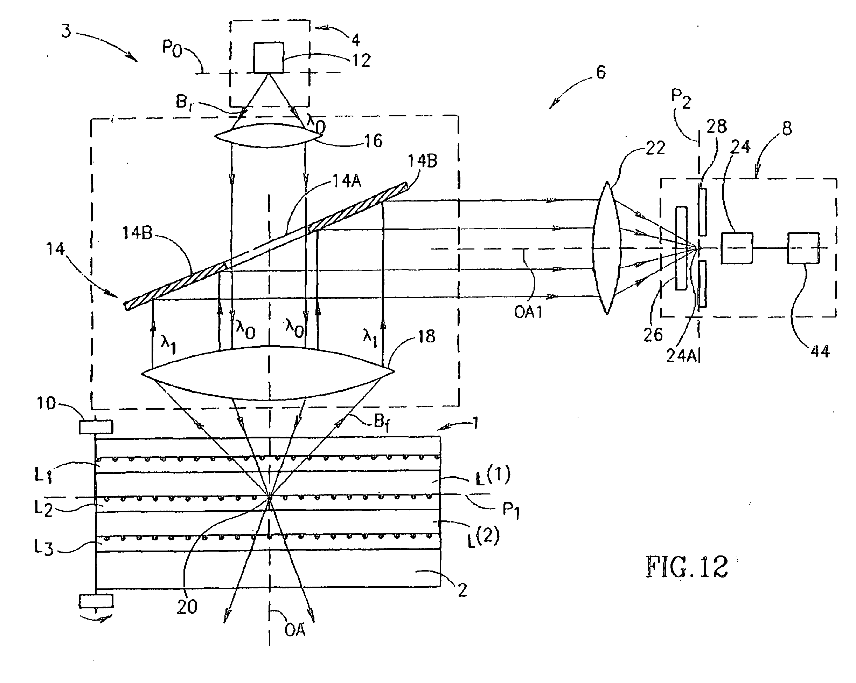

Fig. 12 illustrates, by way of a block diagram, a reading apparatus **330** associated with the disk **1**. Here, in distinction to the previously described embodiments of the invention, an output **24b** of the sensor **24** is connected to an electronic band-pass filter **44**. The filter **44** receives electrical signals coming from the output circuit **24b** and cuts off the low modulation frequency signal, so as to pick up a substantially high modulation frequency signal. The latter (its amplitude) is analyzed with respect to the expected value and with respect to the entire received signal. The construction and operation of such a band-pass filter are known *per se* and therefore need not be specifically described. Additionally, as illustrated in Fig. 109, the spectral filter **26** may be a constructional part of the sensor **24**, rather than being a stand-alone unit.

Those skilled in the art will readily appreciate that many modifications and changes may be applied to the invention as hereinbefore exemplified without departing from its scope defined in and by the appended claims. For example, the lenses **16** and **22** and beam splitter **214** (in Fig. 9) could be replaced by an appropriately designed holographic plate. If the provision of the polarizer **42** is desired, it may be a part of this holographic plate. The excited output radiation may be any scattered radiation other than fluorescence. The technique used in the above-described embodiments of a reading apparatus may be applied for a focus error detection.

**Claims**

1. A scanning apparatus (3, 30, 130, 230) for reading information in a three-dimensional information carrier

   (1) formed with a plurality of spaced-apart data regions ($R_f$), each surrounded by surrounding regions ($R_t$), wherein the data regions ($R_f$) are made of a material capable of generating an output excited radiation, when interacting with a predetermined incident exciting radiation, and the surrounding regions ($R_t$) are substantially optically transparent, the apparatus (3, 30, 130, 230) comprising:

   a. an illumination unit (1) producing a scanning beam of the incident radiation ($B_r$);
   b. a light directing unit (6, 36) for projecting said scanning beam on a scan region (20) located in an addressed plane ($L_2$) inside the carrier (1) and collecting the produced output radiation ($R_f$), the light directing unit (6, 26) comprising a beam splitter (14, 114, 214) accommodated in the optical path of the incident and the output excited radiation and configured to define a first zone (14A, 114A, 214A) and a second zone (14B, 114B, 214B) wherein said first zone (14A, 114A, 214A) is transmitting to both incident radiation and output excited radiation and wherein said second zone (14B, 114B, 214B) is non-transmitting with respect to the incident radiation and said second zone (14B, 114B, 214B) is reflective with respect to the output excited radiation, to thereby pick up a predetermined portion of the collected output radiation so as to provide spatial separation of the output radiation components produced by the data regions located in the addressed plane and the output radiation components produced by the data regions located at any other location inside the carrier;
   c. a detector unit (8) having a receiving surface (24a), and being capable of detecting the output radiation and generating data representative thereof.

2. The apparatus according to Claim 1, wherein the data regions are made of a fluorescent material, said excited radiation being fluorescence.

3. The apparatus according to Claim 1, wherein said predetermined portion of the output radiation propagates within a solid angle ($C_2$) substantially spatially separated from a solid angle ($C_1$) of propagation of the incident radiation.

4. The apparatus according to Claim 1, wherein said beam splitter is a mirror having a central zone transmitting the incident and output radiation, surrounded by a periphery zone blocking the propagation of the incident radiation and reflecting the output radiation.

5. The apparatus according to Claim 1, wherein said beam splitter is a mirror accommodated so as to block the propagation of a central portion of the scanning beam and allowing the propagation of a periphery portion of the scanning beam, the mirror having a surface reflective with respect to the output radiation.

6. The apparatus according to Claim 1, wherein said scan region is sufficiently small to include at least a portion of only one data region.

7. The apparatus according to Claim 1, wherein said scan region includes a plurality of data regions.

8. The apparatus according to Claim 1 wherein said detector unit comprises a sensing means (24) and a filtering means (26, 28).

9. The apparatus according to Claim 8, wherein said filtering means comprises an optical filter (28).

10. The apparatus according to Claim 9, wherein said optical filter is a spectral filter (26).

11. The apparatus according to Claim 9, wherein said optical filter is a spatial filter (28).

**12.** The apparatus according to Claim 1, wherein said spatial filter (28) defines said receiving surface (24a) and is located in front of the sensing means (24), the spatial filter having an aperture hole (29b) of a diameter substantially equal to the diameter of an image of one data region included in the scan region, as obtained at the receiving surface (24a).

**13.** The apparatus according to Claim 8, wherein said filtering means comprises a band-pass filter (44).

**14.** A method for reading information in a three-dimensional information carrier (1) formed with a plurality of spaced-apart data regions ($R_f$), each surrounded by surrounding regions ($R_t$), wherein the data regions ($R_f$) are made of a material capable of generating an output excited radiation, when interacting with a predetermined incident exciting radiation, and the surrounding regions ($R_t$) are substantially optically transparent, the method comprising:

1) producing a scanning beam ($B_r$) of said incident radiation;
2) projecting said scanning beam ($B_r$) onto a scan region (20) located in an addressed plane ($L_2$) inside the carrier (1) and collecting the produced output radiation ($R_r$);
3) picking up a predetermined portion of the collected output radiation so as to provide spatial separation of the output radiation components produced by the data regions located in the scan region and the output radiation components produced by the data regions located at any other location inside the carrier; and directing the output radiation components produced by the data regions located in the scan region to a detector unit (8) said picking up and said directing comprising passing the radiation through a a beam splitter (14, 114, 214) accommodated in the optical path of the incident and the output excited radiation and configured to define a first zone (14A, 114A, 214A) and a second zone (14B, 114B, 214B) wherin said first zone (14A, 114A, 214A) is transmitting to both incident radiation and otput excited radiation and wherein said second zone (14B, 114B, 214B) is non-transmitting with respect to the incident radiation and said second zone (14B, 114B, 214B) is reflective with respect to the output excited radiation; and
4) detecting the output radiation and generating data representative thereof.

**15.** The method according to Claim 14, wherein said picking up of the predetermined portion of the collected output radiation comprises the step of:

- separating a portion of the collected output radiation propagating with a solid angle ($C_2$) substantially spatially separated from a solid angle ($C_2$) of propagation of the incident radiation.

**Patentansprüche**

**1.** Abtastvorrichtung (3, 30, 130, 230) zum Lesen von Information in einem dreidimensionalen Informationsträger (1), der mit einer Mehrzahl von voneinander beabstandeten Datenbereichen ($R_f$) ausgebildet ist, die jeweils von Umgebungsregionen ($R_t$) umgeben werden, wobei die Datenregionen ($R_f$) aus einem Material gefertigt ist, das dazu in der Lage ist, eine zum Aussenden angeregte Strahlung zu erzeugen, wenn es mit einer vorgegebenen auftreffenden Erregungsstrahlung zusammenwirkt, und die umgebenden Bereiche ($R_t$) im wesentlichen optisch transparent sind, mit:

- a. einer Beleuchtungseinheit (1) zum Erzeugen eines Abtaststrahles der auftreffenden Strahlung ($B_r$);
- b. einer Lichtausrichtungseinheit (6, 36) zum Projizieren des Abtaststrahles auf einen Abtastbereich (20), der in einer adressierten Ebene ($L_2$) im Inneren des Trägers (1) angeordnet ist und die erzeugte Ausgangsstrahlung ($R_f$) sammelt, wobei die Lichtausrichtungseinheit (6, 26) einen Strahlteiler (14, 114, 214) aufweist, der in dem optischen Weg der einfallenden und der ausgesendeten erregten Strahlung liegt und ausgebildet ist zur Definition einer ersten Zone (14A, 114A, 214A) und einer zweiten Zone (14B, 114B, 214B, wobei die erste Zone (14A, 114A, 214A) sowohl zu der einfallenden Strahlung als auch zu der ausgesendeten erregten Strahlung weiterleitet und wobei die zweite Zone (14B, 114B, 214B) nicht weiterleitend ist bezüglich der einfallenden Strahlung und die zweite Zone (14B, 114B, 214B) bezüglich der ausgesendeten erregten Strahlung nicht reflektiv ist, um so einen vorgegebenen Bereich der gesammelten Ausgangsstrahlung aufzunehmen, um eine beabstandete Trennung der ausgesendeten Strahlungskomponenten, die von den Datenbereichen, die in der adressierten Ebene angeordnet sind, und der audgesensten Strahlungskomponenten, die durch die Datenbereiche an einem anderen Ort im Inneren des Trägers angeordnet sind, zu schaffen;
- c. eine Detektoreinheit (8) mit einer Empfangsfläche (24a), die dazu in der Lage ist, die ausgesendete Strahlung zu detektieren und dieser entsprechenden Daten zu erzeugen

**2.** Vorrichtung nach Anspruch 1, wobei die Datenbereiche aus einem fluoreszierenden Material bestehen und die erregte Strahlung Fluoreszenz ist.

**3.** Vorrichtung nach Anspruch 1, wobei der vorgegebene Abschnitt der ausgegebenen Strahlung in einem festen Winkel ($C_2$) im wesentlichen mit Abstand getrennt von einem festen Winkel ($C_1$) des Fortschreitens der eingehenden Strahlung fortschreitet.

**4.** Vorrichtung nach Anspruch 1, wobei der Strahlteiler ein Spiegel ist mit einer zentralen Zone, die die einfallende und die ausgesendete Strahlung weiterleitet, umgeben von einer peripheren Zone, die das Fortschreiten der einfallenden Strahlung blockiert und die ausgesendete Strahlung reflektiert.

**5.** Die Vorrichtung nach Anspruch 1, wobei der Strahlteiler ein Spiegel ist, der derart angeordnet ist, dass er das Fortschreiten eines zentralen Abschnitts des Abtaststrahls blockiert und das Fortschreiten eines peripheren Abschnitts des Abtaststrahles erlaubt, wobei der Spiegel eine Fläche hat, die bezüglich der ausgesendeten Strahlung reflektiv ist.

**6.** Die Vorrichtung nach Anspruch 1, wobei der Abtastbereich ausreichend klein ist, um wenigstens einen Abschnitt lediglich eines Datenbereichs einzuschließen.

**7.** Die Vorrichtung nach Anspruch 1, wobei der Abtastbereich eine Mehrzahl von Datenbereichen beinhaltet.

**8.** Die Vorrichtung nach Anspruch 1, wobei die Detektoreinheit ein Sensiermittel (24) und ein Filtermittel (26, 28) aufweist.

**9.** Die Vorrichtung nach Anspruch 8, wobei das Filtermittel einen optischen Filter (28) aufweist.

**10.** Die Vorrichtung nach Anspruch 9, wobei das optische Filter ein Spektralfilter (26) ist.

**11.** Die Vorrichtung nach Anspruch 9, wobei das optische Filter ein Raumfilter (28) ist.

**12.** Die Vorrichtung nach Anspruch 1, wobei der Raumfilter (28) die aufnehmende Fläche (24a) definiert und vor dem Sensiermittel (24) angeordnet ist, wobei das Raumfilter eine Durchlassbohrung (29b) mit einem Durchmesser, der im wesentlichen gleich dem Durchmesser eines Bildes eines Datenbereichs, der in dem Abtastbereich eingeschlossen ist, hat, wie er an der aufnehmenden Fläche vorliegt.

**13.** Die Vorrichtung nach Anspruch 8, wobei das Filtermittel einen Band-Pass-Filter (44) aufweist.

**14.** Verfahren zum Lesen von Information in einem dreidimensionalen Informationsträger (1), der mit einer Mehrzahl von voneinander beabstandeten Datenbereichen ($R_f$) ausgebildet ist, die jeweils von Umgebungsbereichen ($R_t$) umgeben sind, wobei die Datenbereiche ($R_f$) aus einem Material bestehen, das dazu in der Lage ist, eine ausgesendete erregte Strahlung zu erzeugen, wenn sie mit einer vorgegebenen einfallenden Erregungsstrahlung wechselwirkt, und die umgebenden Bereiche ($R_t$) optisch transparent sind, wobei das Verfahren aufweist:

1) Erzeugen eines Abtaststrahles ($B_r$) der einfallenden Strahlung;
2) Werfen des Abtaststrahles ($B_r$) auf einen Abtastbereich (20), der in einer adressierten Ebene ($L_2$) im Inneren des Trägers (1) angeordnet ist und die erzeugte ausgesendete Strahlung ($R_r$) sammelt;
3) Aufnehmen des vorgegebenen Abschnitts der gesammelten ausgesendeten Strahlung derart, dass eine räumliche Trennung der ausgesendeten Strahlungskomponenten, die von den Datenbereichen, die in dem Abtastbereich angeordnet sind, schafft, und die ausgesendeten Strahlungskomponenten, die von den Datenbereichen erzeugt sind, die an einem anderen Ort im Inneren des Trägers lokalisiert sind, erzeugt sind; und Richten der ausgesendeten Strahlungskomponenten, die von den Datenbereichen erzeugt sind, die in dem Abtastbereich erzeugt worden sind, an eine Detektoreinheit (8), wobei das Aufnehmen und das Richten das Führen der Strahlung durch einen Stahlteiler (14, 114, 214) aufweist, der in dem optischen Weg der einfallenden und der ausgesendeten erregten Strahlung liegt und konfiguriert ist, um eine erste Zone (14A, 114A, 214A) und eine zweite Zone (14B, 114B, 214B) zu definieren, wobei die erste Zone (14A, 114A, 214A) sowohl die einfallende Strahlung als auch die ausgesendete erregte Strahlung weiterleitet und wobei die zweite Zone (14B, 114B, 214) bezüglich der einfallenden Strahlung nicht weiterleitend ist und die zweite Zone (14B, 114B, 214B) bezüglich der ausgesendeten erregten Strahlung reflektiv ist; und

4) Detektieren der ausgesendeten Strahlung und Erzeugen von dieser entsprechenden Daten.

**15.** Verfahren nach Anspruch 14, wobei das Aufnehmen des vorgegebenen Teiles der gesammelten ausgesendeten Strahlung den folgenden Schritt aufweist:

- Trennen eines Bereichs der gesammelten ausgesendeten Strahlung, die mit einem festen Winkel ($C_2$) im wesentlichen räumlich getrennt von einem festen Winkel ($C_2$) des Fortschreitens der einfallenden Strahlung fortschreitet.

**Revendications**

**1.** Appareil de balayage (3, 30, 130, 230) destiné à lire des informations dans un support d'informations tridimensionnel (1) formé d'une pluralité de régions de données espacées ($R_f$), chacune entourée de régions environnantes ($R_t$), dans lequel les régions de données ($R_f$) sont composées d'un matériau capable de générer un rayonnement excité de sortie, lors d'une interaction avec un rayonnement d'excitation incident prédéterminé, et les régions environnantes ($R_t$) sont sensiblement optiquement transparentes, l'appareil (3, 30, 130, 230) comprenant :

a. une unité d'illumination (1) produisant un faisceau de balayage du rayonnement incident ($B_r$) ;
b. une unité de direction de lumière (6, 36) destinée à projeter ledit faisceau de balayage sur une région de balayage (20) située dans un plan adressé ($L_2$) à l'intérieur du support (1) et à collecter le rayonnement de sortie produit ($R_f$), l'unité de direction de lumière (6, 26) comprenant un séparateur de faisceau (14, 114, 214) logé dans le chemin optique du rayonnement incident et excité de sortie et configuré pour définir une première zone (14A, 114A, 214A) et une seconde zone (14B, 114B, 214B), ladite première zone (14A, 114A, 214A) étant émettrice vis-à-vis du rayonnement incident et du rayonnement excité de sortie et ladite seconde zone (14B, 114B, 214B) étant non émettrice par rapport au rayonnement incident et ladite seconde zone (14B, 114B, 214B) étant réfléchissante par rapport au rayonnement excité de sortie, pour ainsi prendre une partie prédéterminée du rayonnement de sortie collecté de manière à fournir une séparation spatiale des composants de rayonnement de sortie produits par les régions de données situées dans le plan adressé et des composants de rayonnement de sortie produits par les régions de données situées dans tout autre endroit approprié à l'intérieur du support ;
c. une unité de détection (8) ayant une surface de réception (24a) et étant capable de détecter le rayonnement de sortie et générant des données représentatives de celui-ci.

**2.** Appareil selon la revendication 1, dans lequel les régions de données sont composées d'un matériau fluorescent, ledit rayonnement excité étant fluorescent.

**3.** Appareil selon la revendication 1, dans lequel ladite partie prédéterminée du rayonnement de sortie se propage dans un angle solide ($C_2$) sensiblement séparé spatialement d'un angle solide ($C_1$) de propagation du rayonnement incident.

**4.** Appareil selon la revendication 1, dans lequel ledit séparateur de faisceau est un miroir ayant une zone centrale émettant le rayonnement incident et de sortie, entouré d'une zone de périphérie bloquant la propagation du rayonnement incident et réfléchissant le rayonnement de sortie.

**5.** Appareil selon la revendication 1, dans lequel ledit séparateur de faisceau est un miroir adapté pour bloquer la propagation d'une partie centrale du faisceau de balayage et permettant la propagation d'une partie de périphérie du faisceau de balayage, le miroir ayant une surface réfléchissante par rapport au rayonnement de sortie.

**6.** Appareil selon la revendication 1, dans lequel ladite région de balayage est suffisamment petite pour comprendre au moins une partie de seulement une région de données.

**7.** Appareil selon la revendication 1, dans lequel ladite région de balayage comprend une pluralité de régions de données.

**8.** Appareil selon la revendication 1, dans lequel ladite unité de détection comprend un moyen de détection (24) et un moyen de filtrage (26, 28).

**9.** Appareil selon la revendication 8, dans lequel ledit moyen de filtrage comprend un filtre optique (28).

**10.** Appareil selon la revendication 9, dans lequel ledit filtre optique est un filtre spectral (26).

**11.** Appareil selon la revendication 9, dans lequel ledit filtre spectral est un filtre spatial (28).

**12.** Appareil selon la revendication 1, dans lequel ledit filtre spatial (28) définit ladite surface de réception (24a) et est situé devant le moyen de détection (24), le filtre spatial ayant un trou d'ouverture (29b) d'un diamètre sensiblement égal au diamètre d'une image d'une région de données incluse dans la région de balayage, comme obtenu au niveau de la surface de réception (24a).

**13.** Appareil selon la revendication 8, dans lequel ledit moyen de filtrage comprend un filtre passe-bande (44).

**14.** Procédé de lecture d'informations dans un support d'informations tridimensionnel (1) formé d'une pluralité de régions de données espacées ($R_f$), chacune entourée de régions environnantes ($R_t$), dans lequel les régions de données ($R_f$) sont composées d'un matériau capable de générer un rayonnement excité de sortie, lors d'une interaction avec un rayonnement d'excitation incident prédéterminé, et les régions environnantes ($R_t$) sont sensiblement optiquement transparentes, le procédé comprenant :

1) la production d'un faisceau de balayage ($B_r$) dudit rayonnement incident ;
2) la projection dudit faisceau de balayage ($B_r$) sur une région de balayage (20) située dans un plan adressé ($L_2$) à l'intérieur du support (1) et la collecte du rayonnement de sortie produit ($R_f$) ;
3) la prise d'une partie prédéterminée du rayonnement de sortie collecté de manière à fournir une séparation spatiale des composants de rayonnement de sortie produits par les régions de données situées dans la région de balayage et des composants de rayonnement de sortie produits par les régions de données situées dans tout autre endroit approprié à l'intérieur du support ; et la direction des composants de rayonnement de sortie produits par les régions de données situées dans la région de balayage vers une unité de détection (8), ladite prise et ladite direction comprenant le passage du rayonnement à travers un séparateur de faisceau (14, 114, 214) logé dans le chemin optique du rayonnement incident et du rayonnement excité de sortie et configuré pour définir une première zone (14A, 114A, 214A) et une seconde zone (14B, 114B, 214B), ladite première zone (14A, 114A, 214A) étant émettrice vis-à-vis du rayonnement incident et du rayonnement excité de sortie et ladite seconde zone (14B, 114B, 214B) étant non émettrice par rapport au rayonnement incident et ladite seconde zone (14B, 114B, 214B) étant réfléchissante par rapport au rayonnement excité de sortie ; et
4) la détection du rayonnement de sortie et la génération de données représentatives de celui-ci.

**15.** Procédé selon la revendication 14, dans lequel ladite prise de la partie prédéterminée du rayonnement de sortie collecté comprend l'étape consistant à :

- séparer une partie du rayonnement de sortie collecté se propageant avec un angle solide ($C_2$) sensiblement séparé spatialement d'un angle solide ($C_2$) de propagation du rayonnement incident.

FIG.1A

FIG.1B

FIG.2A

FIG.3

FIG.2B

FIG.4A

FIG.4B

FIG.5A

FIG.5B

FIG.6

FIG.8

FIG.9

FIG.10

FIG.11

EP 0 934 587 B1

FIG.12